# EUROPEAN PATENT SPECIFICATION

(11) **EP 0 634 147 B1**
(45) Date of publication and mention of the grant of the patent: **03.02.1999**
(21) Application number: 94110668.4
(22) Date of filing: 08.07.1994
(51) Int. Cl.: A61C 1/05, A61C 1/16, A61C 3/02

(54) **Dental handpiece having dust protection member**
Dentales Handstück mit einem Staubschutzelement
Pièce à main pour dentisterie avec écran anti debris

(30) Priority: 12.07.1993 JP 37957/93
(43) Date of publication of application: 18.01.1995
(73) Proprietor: Nakanishi Inc., Kanuma-shi Tochigi-ken (JP)
(72) Inventor: Sekiguchi, Hiroji, c/o Nakaniahi Dental Mfg., Tochigi-ken (JP)
(74) Representative: Herrmann-Trentepohl, Werner, Dipl.-Ing.

(56) References cited:
- EP-A- 0 471 916
- US-A- 3 762 052

## Description

### Background Of The Invention

This invention relates to a dental handpiece and more particularly to a dental treatment tool having a dust prevention member for preventing foreign matters, such as tooth debris from being intruded into bearing portions within the handpiece.

The dental handpiece having a dust prevention mechanism is disclosed in Japanese Laid-Open Utility Model Application No. 4-88922 (1992). Such dental handpiece has a chuck member for holding a dental treatment tool, a bur sleeve for holding the chuck member, and a rotatable partitioning member rotated in unison with the bur sleeve. There is formed a gap in the outer periphery of the rotatable partitioning member communicationing at one end with the bearing portions and at the other end with an opening in the bur sleeve. There is also formed a discharge port communicating with the gap for discharging the foreign matter, such as tooth debris.

Although a certain favourable effect in dust prevention may be expected of the above-described dust prevention device, it suffers above all from a complicated mechanism which leads to considerable cost and labor-consuming maintenance operation.

Another dental handpiece having a dust prevention member is disclosed in the US-patent 3,762,052. This document, which forms the basis for the preamble of claim 1, describes a circular flange as a dust prevention member secured to a sleeve, which is integral with the handpiece head. Although this device may prevent dust and dirt from penetrating into the opening of the handpiece head it has disadvantages concerning the hygienic properties. As the dust prevention member cannot be separated from the handpiece head it has to be cleaned toghether with the head. However, because of the devices additionally attached to the handpiece head sterilization of the dust prevention member is greatly limited.

### Summary Of The Invention

It is therefore an object of the present invention to provide a dental handpiece which is simple in construction and superior in hygienic properties by having a dust prevention member on the dental treatment tool on the outer side of the handpiece for preventing the foreign matter from being intruded into the interior of the handpiece.

The above and other objects of the present invention will become apparent from the following description.

According to the present invention, there is provided a dental handpiece comprising holding and securing means for detachably accommodating a dental treatment tool therein, an opening for accommodating the dental treatment tool in the holding and securing means, and a dust prevention member secured to the dental treatment tool, the dust prevention member overlying the vicinity of the opening for preventing dust and dirt from being sucked into the opening.

### BRIEF DESCRIPTION OF THE DRAWINGS

Fig.1 is a partial cross-sectional view showing a dental handpiece head according to the present invention.
Fig.2 is a partial cross-sectional view showing a dental handpiece head having a chuck member distinct from that of the handpiece head shown in Fig.1.
Figs.3(a) to 3(c) are schematic cross-sectional views showing respective different embodiments of dust prevention members.
Figs.4(a) to 4(d) are partial cross-sectional views showing dental treatment tools of different types fitted with various different dust prevention members.
Figs.5(a) and 5(b) are side views showing dental treatment tools fitted with dust prevention members according to modification of the present invention.

### PREFERRED EMBODIMENTS OF THE INVENTION

Referring to the drawings, preferred embodiments of the present invention will be explained in detail.

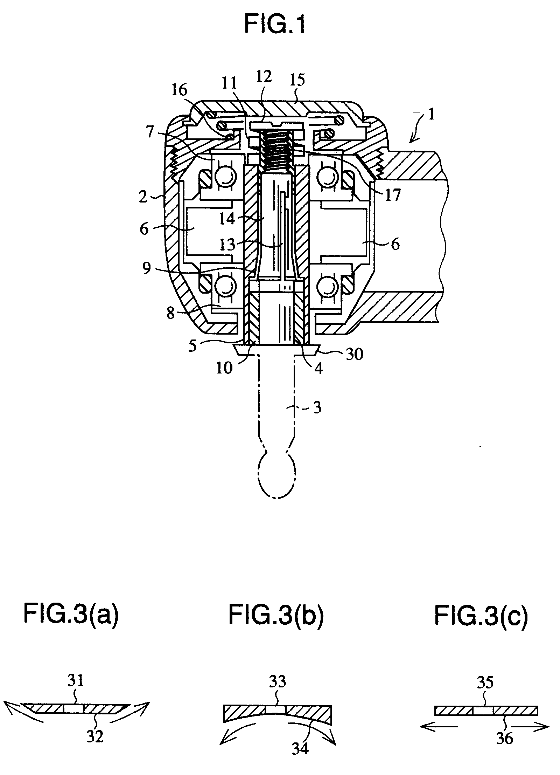

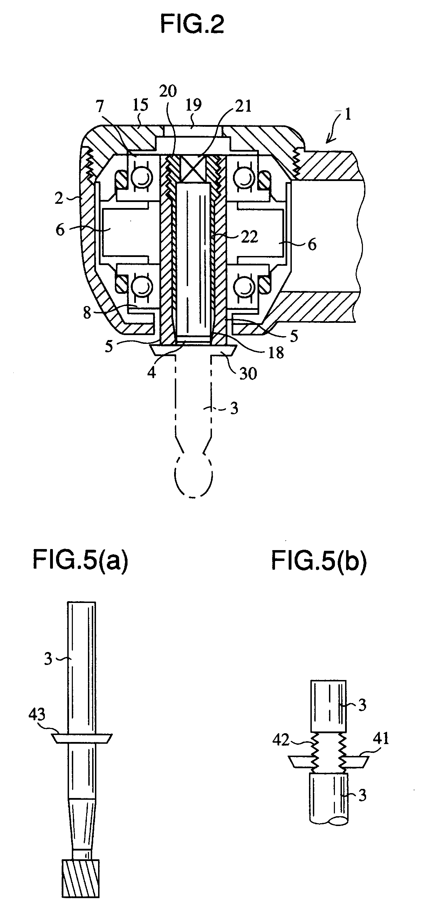

Figs.1 and 2 are partial cross-sectional views showing preferred embodiments of the dental handpiece of the present invention in which a dental treatment tool is fitted to a push type chuck and another preferred embodiment of the dental handpiece of the present invention in which a dental treatment tool is fitted to a screw type dental handpiece, respectively.

Referring to Fig.1, a tool rotating shaft, that is a hollow rotor shaft 5 for receiving and securing therein a dental treatment tool 3 via a tool inserting opening 4 along an annular guide 10, an air turbine 6 for rotationally driving the rotor shaft 5 by compressed air, and an upper ball bearing 7 and a lower ball bearing 8 arranged at an upper portion and a lower portion, respectively, between the rotor shaft 5 and a housing 2 are arranged within the housing 2, which is a head part of an angle-type handpiece 1.

The inner portion of the hollow rotor shaft 5 has a downwardly tapered surface 9 and a chuck 14 having a groove 13 is slidably arranged within the inside of the hollow rotor shaft 5. The chuck 14 is formed integrally with a sleeve 17 having screw threads on its inner surface meshing with mating screw threads of a bolt 12. The bolt 12, the chuck 14 and the sleeve 17 are perpetually biased upward by a compression spring 11. On the top of the housing 2 is a head cap 15 perpetually biased upward by a compression spring 16.

For attaching the dental tool 3 by the above-described push type chuck, the head cap 15 is thrust downward in advance for lowering the bolt 12 for producing a clearance between the tapered surface 9 and the skirt portions of the chuck 14. The dental tool 3 is then introduced into the tool inserting opening 4 with an upper part of the tool 3 first until the upper part of the tool 3 gets to the lower end of the sleeve 17. When releasing the head cap 15, the chuck 14 is moved upward along with the bolt 12 and the sleeve 17 under the force of the spring 11 until it abuts on the tapered surface 9. This causes the groove 13 in the chuck 14 to be reduced in width so that the tool 3 is secured by the chuck 14.

Fig.2 shows a modified embodiment of the dental handpiece according to the present invention in which a dental tool 3 is mounted on a screw type chuck. The present modification is different from the embodiment shown in Fig.1 in that a tapered inner surface 18 of the rotor shaft 5 is tapered upward and a chuck 22 having a square-shaped opening 21 has its male screw threadedly engaged with a female screw 20 of the rotor shaft 20. For introducing the dental tool 3 into the inside of the chuck 22 and securing the tool 3 therein, a wrench, not shown, is inserted via a wrench opening 19 in the head cap 15 into the square-shaped opening 21 for rotating the chuck counterclockwise to thereby allow the chuck 22 to be moved upwards. By rotating the wrench clockwise after the dental treatment tool 3 is inserted through the opening 4 into the chuck 22, the chuck 22 abuts against the tapered surface 18 of the rotor shaft 5, so that the tool 3 is abutted by the chuck 22 and thereby secured in position.

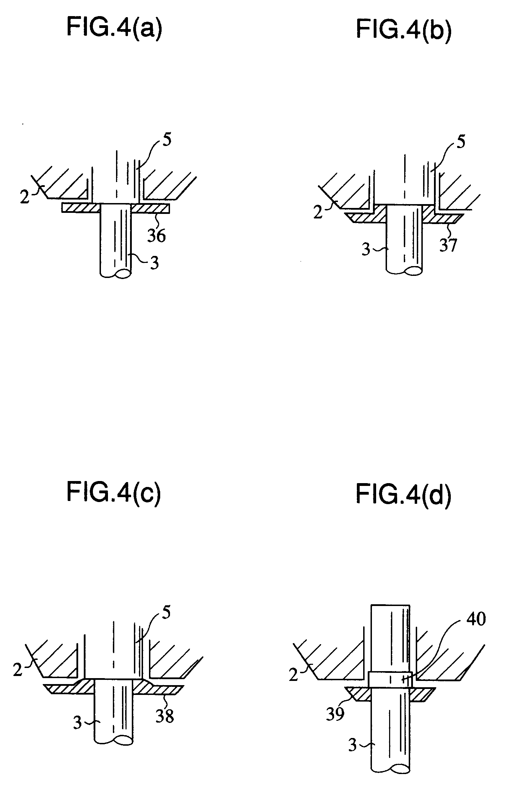

A dust prevention member is provided on the dental tool 3 of the dental handpiece. Such dust prevention member may be of any desired physical properties or shape provided that it is capable of preventing foreign matters such as tooth debris from being sucked into the inside of the head 2 and may be placed in the vicinity of the rotor shaft 5. The dust prevention member shown in Fig.3(a) is a molded disc 32 formed of rubber or the like material and having a center opening 31 for passage of the dental tool and also having its lower surface chamfered upward as shown. The dust prevention member shown in Fig.3(b) is a molded disc 33 of rubber or the like material and having a center opening 33 for passage of the dental tool therethrough and also having its outer periphery thickened arcuately when seen in the vertical cross-section. The dust prevention member shown in Fig.3(c) is a molded disc 36 formed of rubber or the like material having a uniform thickness and having a center opening 35 for passage of the dental tool therethrough. The dust prevention member may be formed of a stainless steel or the like rigid material in place of an elastic material, such as rubber. In Figs.3(a) to 3(c), the direction of flying of the tooth debris or the like is indicated by arrows.

Referring to Fig.4, there are shown discs 36, 37 and 38 each serving as the dust prevention member. With the discs 36 and 38 shown in Figs.4(a) and (c), respectively, the rotor shaft 5 is protruded out of the tool inserting opening, whereas with the disc 37, shown in Fig.4(b), the rotor shaft 5 is disposed within the tool inserting opening. The disc 36 shown in Fig.4(a) is similar to the one shown in Fig.3(c). In addition, the disc having thickened peripheral portions, as shown in Fig.3(b), a disc 38 having a raised central portion, as shown in Fig.4(c) may be employed, while a disc 39 is inserted at a thickened portion 40 of the tool 3 in the vicinity of the tool inserting opening, as shown in Fig.4(d).

In Figs.5(a) and (b), there are shown dust prevention members which are different from those shown in Figs.3 and 4. A dust prevention member 4 shown in Fig.5(a) is formed of stainless steel and welded to the dental tool 3. A dust prevention member 41 shown in Fig.5(b) is threadedly engaged in a threaded portion 42 of the tool 3 in order to permit adjustment of the distance between the housing 2 and the dust prevention member 41.

The above-described dust prevention members, which may be separate from or integral with the dental tool 3, may be sterilized separately or simultaneously with the dental tool. The dust prevention member of the separate type may also be arranged so as to be disposable.

The foregoing description has been made of an angle type dental handpiece. However, the present invention may also be applied to a straight type dental handpiece. The dental handpiece of the type in which the dental tool rotation is produced by an electric motor developing higher torque with gearing instead of an air turbine is also encompassed by the technical scope of the present invention.

Since the dust prevention member is provided for overlying the opening part of the tool rotating shaft of the dental handpiece, when the dental tool is fitted on the tool rotating shaft, any dust produced with the cutting of teeth by tool rotation is scattered outward under the centrifugal force. On the other hand, it is possible to prevent dust and dirt from being introduced at the opening part into the inside of the handpiece.

## Claims

1. A dental handpiece comprising holding and securing means (5, 14, 22) for detachably accommodating a dental treatment tool (3) therein, an opening (4) for accommodating said dental treatment tool (3) in said holding and securing means (5, 14, 22), and a dust prevention member (30, 32, 34, 36, 37, 38, 39, 41, 43) overlying the vicinity of said opening (4) for preventing dust and dirt from being sucked into the opening (4), characterized in that said dust prevention member (30, 32, 34, 36, 37, 38, 39, 41, 43) is secured to said detachable dental treatment tool (3) itself.

2. The dental handpiece as claimed in claim 1 wherein said dust prevention member (32) is a disc having its peripheral portion chamfered so as to be reduced in thickness.

3. The dental handpiece as claimed in claim 1 wherein said dust prevention member (34) is a disc having its peripheral portion thickened as compared to a center region.

4. The dental handpiece as claimed in claim 1 wherein said dust prevention member (36) is a disc having a uniform thickness.

5. The dental handpiece as claimed in claim 1 wherein said dust prevention member (37, 38) is a disc having a central raised portion.

6. The dental handpiece as claimed in claim 1 wherein said dental treatment tool (3) has a radially enlarged portion (40) in the vicinity of the opening (4), said enlarged portion (40) retaining and securing the dust prevention member (39) in position.

7. The dental handpiece as claimed in claim 1 wherein the dental treatment tool (3) is formed integral with the dust prevention member (43).

8. The dental handpiece as claimed in claim 1 wherein said dust prevention member (41) is movable and secured at a desired position along the longitudinal axis of the dental treatment tool (3).

## Patentansprüche

1. Dentalhandstück mit Halte- und Sicherungseinrichtung (5, 14, 22) zur lösbaren Aufnahme eines Dentalwerkzeuges (3), mit einer Öffnung (4) zur Aufnahme des Dentalwerkzeuges (3) in der Halte- und Sicherungseinrichtung (5, 14, 22) und einem Staubabhalteelement (30, 32, 34, 36, 37, 38, 39, 41, 43), das die Umgebung der Öffnung überlagert, um Staub und Schmutz daran zu hindern, in die Öffnung (4) eingesaugt zu werden, **dadurch gekennzeichnet, daß** das Staubabhalteelement (30, 32 34, 36, 37, 38, 39, 41, 43) an dem lösbaren Dentalwerkzeug (3) selbst befestigt ist.

2. Dentalhandstück nach Anspruch 1, **dadurch gekennzeichnet, daß** das Staubabhalteelement (32) eine Scheibe ist, deren peripherer Bereich mit einer Fase versehen ist, so daß seine Dicke reduziert ist.

3. Dentalhandstück nach Anspruch 1, **dadurch gekennzeichnet, daß** das Staubabhalteelement (34) eine Scheibe ist, deren peripherer Bereich gegenüber dem zentralen Bereich dicker ist.

4. Dentalhandstück nach Anspruch 1, **dadurch gekennzeichnet, daß** das Staubabhalteelement (36) eine Scheibe ist, die eine gleichmäßige Dicke aufweist.

5. Dentalhandstück nach Anspruch 1, **dadurch gekennzeichent, daß** das Staubabhalteelement (37, 38) eine Scheibe ist, die einen erhöhten zentralen Bereich aufweist.

6. Dentalhandstück nach Anspruch 1, **dadurch gekennzeichnet, daß** das Dentalwerkzeug (3) in der Umgebung der Öffnung (4) einen radial vergrößerten Bereich (40) aufweist, wobei der vergrößerte Bereich (40) das Staubabhalteelement (39) in Position halt und sichert.

7. Dentalhandstück nach Anspruch 1, **dadurch gekennzeichnet, daß** das Dentalwerkzeug (3) integral mit dem Staubabhalteelement (43) ausgebildet ist.

8. Dentalhandstück nach Anspruch 1, **dadurch gekennzeichnet, daß** das Staubabhalteelement (41) beweglich ist und an einer gewünschten Position entlang der Längsachse des Dentalwerkzeuges (3) befestigt ist.

## Revendications

1. Pièce à main dentaire comprenant des moyens de support et de fixation (5, 14, 22) destinés à loger en leur sein de façon amovible un outil de traitement dentaire (3), une ouverture (4) destinée à loger ledit outil de traitement dentaire (3) dans lesdits moyens de support et de fixation (5, 14, 22), et un élément anti-poussières (30, 32, 34, 36, 37, 38, 39, 41, 43) recouvrant le voisinage de ladite ouverture (4) pour empêcher les poussières et les impuretés d'être aspirées à l'intérieur de l'ouverture (4), caractérisée en ce que ledit élément anti-poussières (30, 32, 34, 36, 37, 38, 39, 41, 43) est fixé audit outil de traitement dentaire amovible (3) lui-même.

2. Pièce à main dentaire selon la revendication 1, dans laquelle ledit élément anti-poussières (32) est un disque ayant sa partie périphérique chanfreinée de façon à avoir une épaisseur réduite.

3. Pièce à main dentaire selon la revendication 1, dans laquelle ledit élément anti-poussières (34) est une disque ayant sa partie périphérique épaissie par rapport à une zone centrale.

4. Pièce à main dentaire selon la revendication 1, dans laquelle ledit élément anti-poussières (36) est un disque ayant une épaisseur uniforme.

5. Pièce à main dentaire selon la revendication 1, dans laquelle ledit élément anti-poussières (37, 38) est un disque ayant une partie surélevée centrale.

6. Pièce à main dentaire selon la revendication 1, dans laquelle ledit outil de traitement dentaire (3) comporte une partie agrandie radialement (40) au voisinage de l'ouverture (4), ladite partie agrandie (40) retenant et fixant en position l'élément anti-poussières (39).

7. Pièce à main dentaire selon la revendication 1, dans laquelle l'outil de traitement dentaire (3) est formé d'un seul tenant avec l'élément anti-poussières (43).

8. Pièce à main dentaire selon la revendication 1, dans laquelle ledit élément anti-poussières (41) est mobile et est fixé à une position souhaitée le long de l'axe longitudinal de l'outil de traitement dentaire (3).
